(19) Europäisches Patentamt European Patent Office Office européen des brevets

(11) **EP 1 664 512 B1**

(12) **EUROPÄISCHE PATENTSCHRIFT**

(45) Veröffentlichungstag und Bekanntmachung des Hinweises auf die Patenterteilung:
**30.07.2008 Patentblatt 2008/31**

(21) Anmeldenummer: **04765428.0**

(22) Anmeldetag: **21.09.2004**

(51) Int Cl.:
*F02D 41/38* (2006.01)          *F02D 41/40* (2006.01)
*F02M 63/02* (2006.01)

(86) Internationale Anmeldenummer:
**PCT/EP2004/010547**

(87) Internationale Veröffentlichungsnummer:
**WO 2005/031138 (07.04.2005 Gazette 2005/14)**

(54) **VERFAHREN ZUR STEUERUNG UND REGELUNG EINER BRENNKRAFTMASCHINE**

METHOD FOR CONTROLLING AND REGULATING AN INTERNAL COMBUSTION ENGINE

PROCEDE POUR COMMANDER ET REGULER UN MOTEUR A COMBUSTION INTERNE

(84) Benannte Vertragsstaaten:
**DE FR GB IT**

(30) Priorität: **24.09.2003 DE 10344181**

(43) Veröffentlichungstag der Anmeldung:
**07.06.2006 Patentblatt 2006/23**

(73) Patentinhaber: **MTU FRIEDRICHSHAFEN GMBH
88045 Friedrichshafen (DE)**

(72) Erfinder:
• **SPEETZEN, Ralf
88048 Friedrichshafen (DE)**
• **SCHMIDT, Günther
88046 Friedrichshafen (DE)**
• **KLOOS, Albert
88045 Friedrichshafen (DE)**

(56) Entgegenhaltungen:
**EP-A- 0 894 965          EP-A- 0 905 359
DE-A- 3 118 425          DE-A- 4 344 190
US-A- 5 535 621**

**Beschreibung**

Die Erfindung betrifft ein Verfahren zur Steuerung und Regelung einer Brennkraftmaschine nach dem Oberbegriff von Anspruch 1.

Bei einer Brennkraftmaschine bestimmen der Einspritzbeginn und das Einspritzende maßgeblich die Güte der Verbrennung und die Zusammensetzung des Abgases. Um die gesetzlichen Grenzwerte einzuhalten, werden diese beiden Kenngrößen üblicherweise von einem elektronischen Steuergerät geregelt. In der Praxis tritt bei einer Brennkraftmaschine mit einem Common-Rail-System das Problem auf, dass zwischen dem Bestromungsbeginn des Injektors, dem Nadelhub des Injektors und dem tatsächlichen Einspritzbeginn ein zeitlicher Versatz besteht. Für das Einspritzende gilt Entsprechendes.

Eine Maßnahme zur Entschärfung dieser Problematik besteht darin, den Ankeraufprall am Injektor über eine Veränderung des PWM-Signals zu detektieren. Ein derartige Lösung ist beispielsweise aus der DE 42 37 706 A1 bekannt. Eine andere Möglichkeit zur Erkennung des Ankeraufpralls besteht darin, während der Ankerflugphase die Spule des Injektors mit einem Messstrom zu beaufschlagen. Über den Messstrom wird ein Magnetfeld in der Spule erzeugt, welches sich beim Ankeraufprall ändert. Diese Magnetfeldänderung bewirkt eine auswertbare Induktionsspannung. Eine derartige Lösung ist beispielsweise aus der DE 44 33 209 A1 bekannt. Beide Maßnahmen haben sich in der Praxis bewährt. Die individuellen Eigenschaften der einzelnen Zylinder sowie der Injektoren können jedoch mit diesen Messverfahren nicht detektiert werden. Eine entsprechende Kontrollmessung zur Abstimmung der Regelparameter ist technisch aufwendig und wird daher bei Serienmotoren nicht durchgeführt. Gleiches gilt für die direkte Nadelhub-Messung mit einem Wegsensor.

Eine andere Maßnahme zur Entschärfung der oben genannten Problematik ist aus der DE 31 18 425 A1 bekannt. Hierbei wird der Druckverlauf im Rail gemessen und danach gefiltert. Über die Differenziation des gefilterten Druckverlaufs werden die signifikanten Änderungen, also die Extremwerte, als Einspritzbeginn und Einspritzende interpretiert. Die Filterung des gemessenen Druckverlaufs ist zwingend erforderlich, da auf dem Drucksignal beispielsweise die Einspritzfrequenz und die Förderfrequenz der Hochdruckpumpe als Störgrößen vorhanden sind. Die Filterung eines Signals bewirkt jedoch einen deutlichen zeitlichen Versatz gegenüber dem Rohsignal.

Aus der DE 43 44 190 A1 ist eine Brennkraftmaschine mit einem Common-Rail-System bekannt, bei welchem jedem Injektor ein Einzelspeicher zugeordnet wird.

Der Erfindung liegt die Aufgabe zu Grunde, ein Verfahren für ein Common-Rail-System mit Einzelspeichern bereitzustellen, welches eine zeitnahe Bestimmung des Einspritzbeginns und Einspritzendes gestattet.

Die Aufgabe wird durch die Merkmale des Anspruchs 1 gelöst. Die Ausgestaltungen sind in den Unteransprüchen dargestellt.

Die Erfindung sieht vor, dass aus den gemessenen und gespeicherten Druckwerten der Einzelspeicher in Abhängigkeit des Einspritzendes über eine mathematische Funktion ein virtueller Einspritzbeginn berechnet wird. Der virtuelle Einspritzbeginn wird danach als tatsächlicher Einspritzbeginn für die weitere Steuerung und Regelung der Brennkraftmaschine gesetzt.

Der Unterschied zum Stand der Technik besteht darin, dass für die Betrachtung des Einspritzendes und Einspritzbeginns die gemessenen Roh-Werte verwendet werden. Die Berechnung eines virtuelle Einspritzbeginns und Plausibilisierung bieten den Effekt, dass eine Fehlinterpretation von Störgrößen wirksam verhindert wird.

Durch Anwendung des erfindungsgemäßen Verfahrens bei einem Common-Rail-System mit Einzelspeichern können der Einspritzbeginn sowie das Einspritzende zylinderindividuell bestimmt werden. Das Verfahren ist dadurch direkter und schneller. Als Konsequenz ergibt sich daraus, dass im Motordiagnose-System zielgerichtetere Sicherheitsinformationen vorliegen. Daneben wird der messtechnische Aufwand während der Entwicklungsphase der Brennkraftmaschine deutlich reduziert.

In den Zeichnungen ist ein bevorzugtes Ausführungsbeispiel dargestellt.

Es zeigen:

Fig. 1 ein Systemschaubild;
Fig. 2 ein Zeitdiagramm;
Fig. 3 einen Programm-Ablaufplan

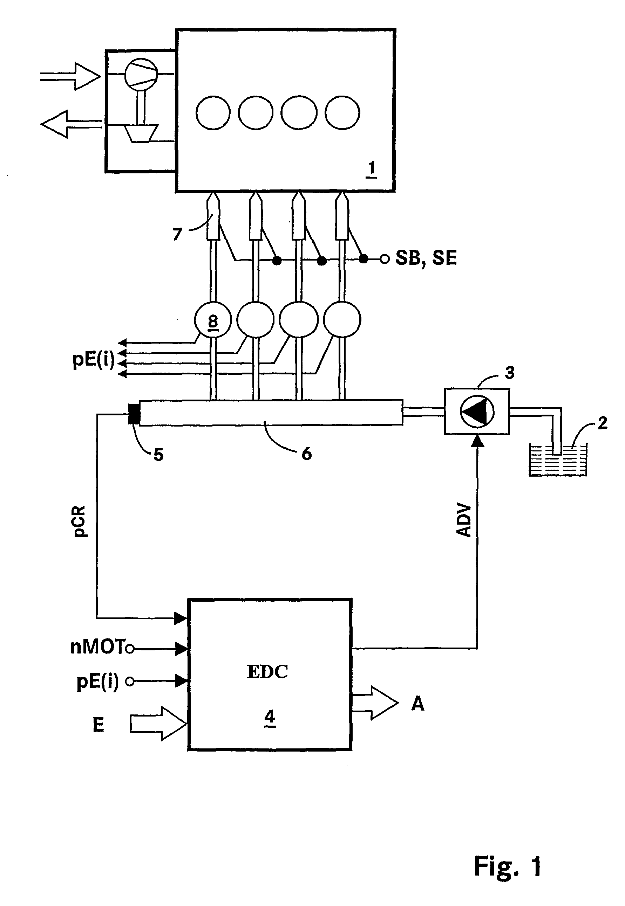

Die Figur 1 zeigt ein Systemschaubild einer elektronisch gesteuerten Brennkraftmaschine 1. Bei der dargestellten Brennkraftmaschine 1 wird der Kraftstoff über ein Common-Rail-System eingespritzt. Dieses umfasst folgende Komponenten: Pumpen 3 mit einer Saugdrossel zur Förderung des Kraftstoffs aus einem Kraftstofftank 2, ein Rail 6, Einzelspeicher 8 und Injektoren 7 zum Einspritzen des Kraftstoffs in die Brennräume der Brennkraftmaschine 1. Bei diesem Common-Rail-System ist der hydraulische Widerstand der Einzelspeicher 8 und der Zulaufleitungen entsprechend angepasst. Für die Erfindung ist es unwesentlich, ob das Rail 6 ein Speichervolumen umfasst oder lediglich als einfache Leitung ausgeführt wird.

Die Betriebsweise der Brennkraftmaschine 1 wird durch ein elektronisches Steuergerät (EDC) 4 geregelt. Das elektronische Steuergerät 4 beinhaltet die üblichen Bestandteile eines Mikrocomputersystems, beispielsweise einen Mikroprozessor, I/O-Bausteine, Puffer und Speicherbausteine (EEPROM, RAM). In den Speicherbausteinen sind die für den Betrieb der Brennkraftmaschine 1 relevanten Betriebsdaten in Kennfeldern/Kennlinien appliziert. Über diese berechnet das elektronische Steuergerät 4 aus den Eingangsgrößen die Ausgangsgrößen. In Figur 1 sind exemplarisch folgende Eingangsgrößen dargestellt: ein Raildruck pCR, der mittels eines Rail-Drucksensors 5 gemessen wird, ein Drehzahl-Signal nMOT der Brennkraftmaschine 1, Drucksignale pE(i) der Einzelspeicher 8 und eine Eingangsgröße E. Unter der Eingangsgröße E sind beispielsweise der Ladeluftdruck eines Turboladers und die Temperaturen der Kühl-/Schmiermittel und des Kraftstoffs subsumiert.

In Figur 1 sind als Ausgangsgrößen des elektronischen Steuergeräts 4 ein Signal ADV zur Steuerung der Saugdrossel und eine Ausgangsgröße A dargestellt. Die Ausgangsgröße A steht stellvertretend für die weiteren Stellsignale zur Steuerung und Regelung der Brennkraftmaschine 1, beispielsweise den Einspritzbeginn SB und das Einspritzende SE.

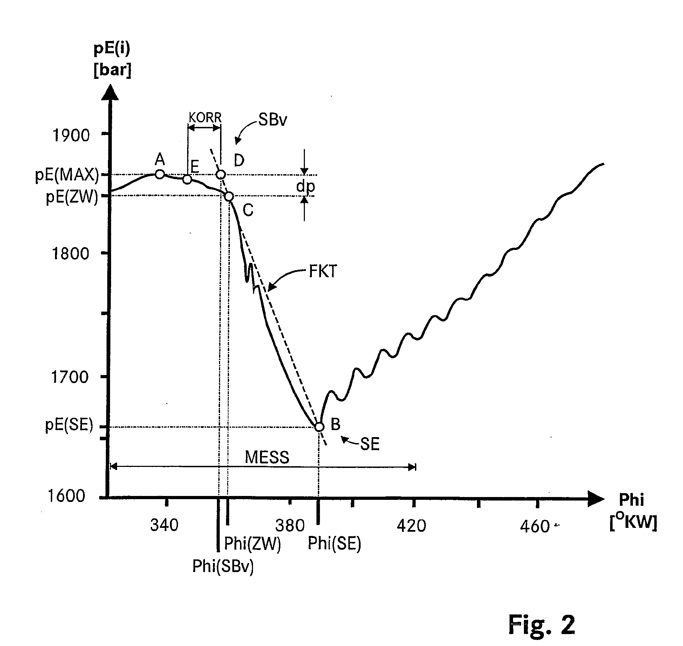

Die Figur 2 zeigt ein Zeitdiagramm eines gemessenen Druckverlaufs in einem Einzelspeicher des Common-Rail-Systems. Auf der Abszisse ist der Kurbelwellen-Winkel Phi aufgetragen. Auf der Ordinate ist der Kraftstoff-Druck im Einzelspeicher pE(i) dargestellt. Der Druckverlauf im Einzelspeicher wird über ein Messintervall gemessen und gespeichert. Das Messintervall kann hierbei einem Arbeitsspiel der Brennkraftmaschine entsprechen, d. h. 720 Grad Kurbelwellen-Winkel. Das in Figur 2 dargestellte Messintervall MESS umfasst exemplarisch den Bereich von 320 bis 420 Grad Kurbelwellen-Winkel.

Das Verfahren gemäß der Erfindung läuft folgendermaßen ab:

Nachdem der Druckverlauf im Einzelspeicher pE(i) während des Messintervalls MESS erfasst und gespeichert wurde, wird der Minimalwert des Drucks ermittelt. Dieser Minimalwert entspricht dem Einspritzende SE. Das Einspritzende SE ist in Figur 2 mit dem Punkt B bezeichnet. Der Punkt B wird durch die beiden Werte Phi(SE) und pE(SE) definiert. Danach wird der maximal aufgetretene Druckwert ausgelesen. Der maximale Druckwert liegt im Messintervall MESS bei einem kleineren Kurbelwellen-Winkel Phi als das Einspritzende SE bzw. dessen Winkel Phi(SE). In Figur 2 ist dieser mit dem Punkt A und dem dazugehörendem Ordinatenwert pE(MAX) dargestellt. Aus dem maximalen Druckwert pE(MAX) und dem Einspritzende-Druckwert pE(SE) wird ein Zwischenwert pE(ZW) gemäß folgender Beziehung berechnet:

$$pE(ZW) = pE(MAX) - dp$$

und

$$dp = (pE(MAX) - pE(SE)) \cdot F1$$

mit

pE(ZW)      Zwischenwert
pE(MAX)     maximaler Druckwert
pE(SE)      Druckwert Einspritzende
F1          Faktor kleiner Eins

Anhand des gemessenen Druckverlaufs pE(i) ist der zum Zwischenwert pE(ZW) zugehörige Kurbelwellen-Winkel Phi(ZW) bekannt. Durch diese beiden Werte wird der Punkt C in Figur 2 definiert. Zum Punkt C gehört das Wertepaar 360 Grad Kurbelwellen-Winkel und 1850 bar. Der Druckunterschied dp zwischen dem Maximalwert pE(MAX) und dem Zwischenwert pE(ZW) ist in Figur 2 ebenfalls dargestellt. Über die beiden Punkte C, B wird eine mathematische Funktion FKT definiert, hier: eine Gerade. Selbstverständlich können auch andere mathematische Funktionen verwendet werden. Hierzu müssten dann entsprechend weitere Zwischenwerte berechnet werden. Über das Einspritzende, entsprechend Punkt B, und der mathematischen Funktion FKT kann in Verbindung mit dem Maximalwert pE(MAX) ein virtueller Einspritzbeginn SBv extrapoliert werden. Dieser virtuelle Einspritzbeginn SBv entspricht in der Figur 2 dem Punkt D. Der virtuelle Einspritzbeginn SBv kann optional über einen konstanten Faktor KORR korrigiert werden, Punkt E. Der Faktor KORR berücksichtigt die Wirkung der hydraulischen Konstanten des Einspritzsystems auf den Einspritzbeginn.

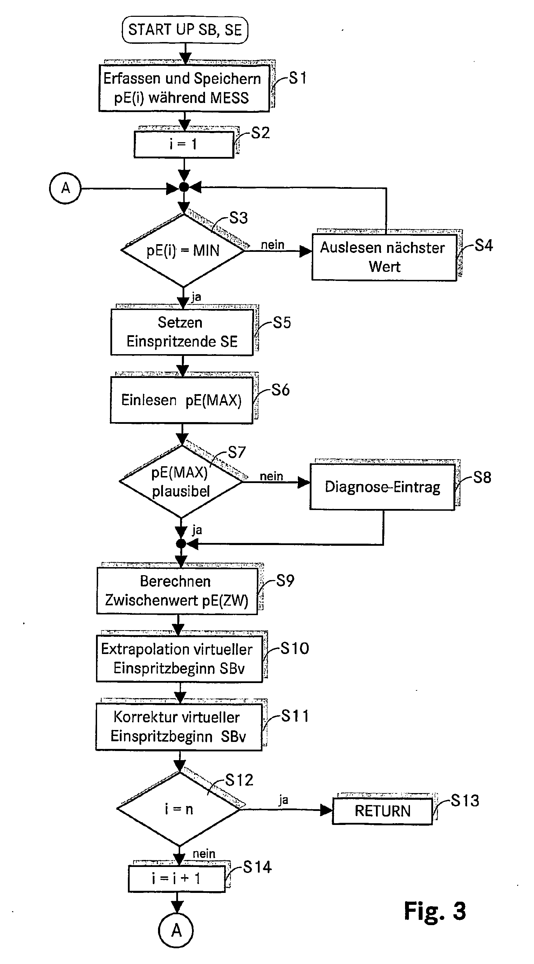

In Figur 3 ist ein Programm-Ablaufplan für das Unterprogramm zur Bestimmung des Einspritzbeginns und Einspritzendes dargestellt. Bei S1 werden die Druckwerte pE(i) im Einzelspeicher während des Messintervalls MESS erfasst und abgespeichert. Bei S2 wird eine Laufvariable i auf Eins gesetzt. Die Laufvariable i entspricht hierbei der Anzahl der verwendeten Einzelspeicher. Bei S3 wird geprüft, ob der ausgelesene Druckwert minimal ist. Ist dies nicht der Fall, so wird bei S4 der nächste Druckwert ausgelesen und erneut geprüft (S3).

Wurde bei S3 der minimalste Druckwert gefunden, so wird bei S5 dieser Druckwert mit dem dazugehörig gemessenen Kurbelwellen-Winkel-Wert als Einspritzende SE gesetzt. Danach wird bei S6 der maximale Druckwert pE (MAX) ermittelt. Bei S7 wird geprüft, ob der gemessene Maximalwert pE(MAX) plausibel ist. Die Plausibilität kann geprüft werden, indem der Maximalwert pE(MAX) mit einem vorgegebenen Druckwert verglichen wird. Als Alternative ist vorgesehen, dass der Maximalwert pE(MAX) mit einem an einem festen Kurbelwellen-Winkel gemessenen Druckwert verglichen wird. Als fester Kurbelwellen-Winkel kann z. B. 320 Grad verwendet werden. Ergibt die Prüfung bei S7, dass der Maximalwert nicht plausibel ist, so wird bei S8 ein Diagnose-Eintrag im elektronischen Steuergerät vorgenommen und danach bei S9 der Programmablauf fortgesetzt.

Ergibt die Prüfung bei S7, dass der Maximalwert pE(MAX) plausibel ist, so wird bei S9 der Zwischenwert pE (ZW) berechnet. Bei S10 wird in Abhängigkeit des Einspritzbeginns und der zuvor ermittelten mathematischen Funktion ein virtueller Einspritzbeginn SBv extrapoliert. Danach wird bei S11 der virtuelle Einspritzbeginn SBv korrigiert. Bei S12 wird geprüft, ob die Laufvariable i einen Endwert n erreicht hat. Ist dies nicht der Fall, so wird bei S14 die Laufvariable i um Eins erhöht und der Programm-Ablaufplan am Punkt A fortgesetzt. Ergibt die Prüfung bei S12, dass für alle Einzelspeicher der virtuelle Einspritzbeginn berechnet wurde, d. h. i entspricht n, so wird bei S13 das Unterprogramm beendet und zum Hauptprogramm zurückgekehrt. Damit ist der Programm-Ablaufplan beendet.

Aus der Beschreibung ergeben sich für das erfindungsgemäße Verfahren folgende Vorteile:

- der zeitliche Versatz zwischen Ansteuersignal und tatsächlichem Einspritzbeginn wird verringert;
- der berechnete virtuelle Einspritzbeginn ist robust gegenüber Störgrößen, wodurch der Regelkreis zur Regelung des Einspritzbeginns und Einspritzendes stabilisiert wird;
- eine zylinderindividuelle Diagnosewert-Aussage und Regelung ist möglich;
- der messtechnische Aufwand während der Entwicklungsphase der Brennkraftmaschine wird verringert.

Bezugszeichen

| | |
|---|---|
| 1 | Brennkraftmaschine |
| 2 | Kraftstofftank |
| 3 | Pumpen |
| 4 | elektronisches Steuergerät |
| 5 | Rail-Drucksensor |
| 6 | Rail |
| 7 | Injektor |
| 8 | Einzelspeicher |

| | |
|---|---|
| pE(i) | Kraftstoff-Druck im Einzelspeicher |
| pE(MAX) | maximaler Druckwert |
| pE(SE) | Druckwert Einspritzende |
| pE(ZW) | Zwischenwert |
| Phi | Kurbelwellen-Winkel |
| Phi(SE) | Winkel Einspritzende |
| Phi(ZW) | Winkel Zwischenwert |
| SB | Einspritzbeginn |
| SE | Einspritzende |
| SBv | virtueller Einspritzbeginn |
| MESS | Messintervall |
| KORR | Faktor |
| FKT | mathematische Funktion |

**Patentansprüche**

1. Verfahren zur Steuerung und Regelung einer Brennkraftmaschine (1) mit einem Common-Rail-System einschließlich Einzelspeichern (8), bei dem ein Kraftstoff-Druck der Einzelspeicher (pE(i), i = 1, 2 ... n) während eines Messintervalls (MESS) erfasst und gespeichert wird und eine signifikante Änderung des Kraftstoff-Drucks (pE(i)) als Einspritzbeginn (SB = f(pE(i), Phi)) oder Einspritzende (SE = f(pE(i), Phi)) interpretiert wird,
**dadurch gekennzeichnet,**
**dass** in Abhängigkeit des Einspritzendes (SE) über eine mathematische Funktion (FKT) ein virtueller Einspritzbeginn (SBv) berechnet wird und der virtuelle Einspritzbeginn (SBv) als tatsächlicher Einspritzbeginn (SB) für die weitere Steuerung und Regelung der Brennkraftmaschine (1) gesetzt wird (SB = SBv).

2. Verfahren zur Steuerung und Regelung einer Brennkraftmaschine (1) nach Anspruch 1,
**dadurch gekennzeichnet,**
**dass** der virtuelle Einspritzbeginn (SBv) berechnet wird indem im Messintervall (MESS) ein vor dem Einspritzende (SE) gemessener maximaler Druckwert (pE(MAX))-ausgelesen wird, ein Zwischenwert (pE(ZW)) in Abhängigkeit des maximalen Druckwerts (pE(MAX)) und des Einspritzende-Druckwerts (pE(SE)) berechnet wird, wobei der Zwischenwert (pE(ZW)) und das Einspritzende (SE) die mathematische Funktion (FKT) definieren, und der Kurbelwellen-Winkel (PhiSBv) des virtuellen Einspritzbeginns (SBv) in Abhängigkeit des maximalen Druckwerts (pE(MAX)) über die mathematische Funktion (FKT) extrapoliert wird.

3. Verfahren zur Steuerung und Regelung einer Brennkraftmaschine (1) nach Anspruch 2,
**dadurch gekennzeichnet,**
**dass** der Zwischenwert (pE(ZW)) gemäß folgender Bezeichnung berechnet wird:

$$pE(ZW) = pE(MAX) - dp$$

und

$$dp = (pE(MAX) - pE(SE)) \cdot F1$$

mit

pE(ZW) Zwischenwert
pE(MAX) maximaler Druckwert
pE(SE) Druckwert Einspritzende
F1 Faktor kleiner Eins

4. Verfahren zur Steuerung und Regelung einer Brennkraftmaschine (1) nach Anspruch 2 oder Anspruch 3,
**dadurch gekennzeichnet,**
**dass** der virtuelle Einspritzbeginn (SBv) über einen Faktor (KORR) korrigiert wird.

5. Verfahren zur Steuerung und Regelung einer Brennkraftmaschine (1) nach einem der vorausgegangenen Ansprüche,
**dadurch gekennzeichnet,**
**dass** der maximale Druckwert (pE(MAX)) auf Plausibilität geprüft wird indem dieser mit einem vorgegebenen Druckwert verglichen wird.

6. Verfahren zur Steuerung und Regelung einer Brennkraftmaschine (1) nach einem der vorausgegangenen Ansprüche,
**dadurch gekennzeichnet,**
**dass** der maximale Druckwert (pE(MAX)) auf Plausibilität geprüft wird indem dieser mit einem an einem festen Kurbelwinkel gemessenen Druckwert verglichen wird.

7. Verfahren zur Steuerung und Regelung einer Brennkraftmaschine (1) nach Anspruch 5 oder Anspruch 6,

**dadurch gekennzeichnet,**
**dass** bei Nicht-Plausibilität ein Diagnoseeintrag in einem Speicher eines elektronischen Steuergeräts (4) vorgenommen wird.

8. Verfahren zur Steuerung und Regelung einer Brennkraftmaschine (1) nach einem der vorausgegangenen Ansprüche,
**dadurch gekennzeichnet,**
**dass** das Messintervall (MESS) ein Arbeitsspiel der Brennkraftmaschine (1) beträgt oder einem hieraus auswählbaren Kurbelwellen-Winkelbereich, insbesondere 320 Grad bis 420 Grad, entspricht.

**Claims**

1. Method for performing open-loop and closed-loop control of an internal combustion engine (1) having a common rail system including individual accumulators (8), in which a fuel pressure of the individual accumulators (pE(i), i = 1, 2 ... n) is measured during a measuring interval (MESS) and stored, and a significant change in the fuel pressure (pE(i)) is interpreted as the start of injection (SB = f(pE(i), Phi)) or end of injection (SE = f(pE(i), Phi)), **characterized in that** a virtual start of injection (SBv) is calculated as a function of the end of injection (SE) by means of a mathematical function (FKT), and the virtual start of injection (SBv) is set as the actual start of injection (SB) for the further open-loop and closed-loop control of the internal combustion engine (1) (SB = SBv).

2. Method for performing open-loop and closed-loop control of an internal combustion engine (1) according to Claim 1, **characterized in that** the virtual start of injection (SBv) is calculated **in that** in the measuring interval (MESS) a maximum pressure value (pE(MAX)) which is measured before the end of injection (SE) is read out, an intermediate value (pE(ZW)) is calculated as a function of the maximum pressure value (pE(MAX)) and of the pressure value (pE(SE)) at the end of injection, where the intermediate value (pE(ZW)) and the end of injection (SE) define the mathematical function (FKT), and the crankshaft angle (PhiSBv) of the virtual start of injection (SBv) is extrapolated as a function of the maximum pressure value (pE(MAX)) by means of the mathematical function (FKT).

3. Method for performing open-loop and closed-loop control of an internal combustion engine (1) according to Claim 2, **characterized in that** the intermediate value (pE(ZW)) is calculated according to the following relationship:

$$pE(ZW) = pE(MAX) - dp$$

and

$$dp = (pE(MAX) - pE(SW)) . F1$$

where

pE(ZW) is the intermediate value
pE(MAX) is the maximum pressure value
pE(SE) is the pressure value at end of injection
F1 is the factor less than one

4. Method for performing open-loop and closed-loop control of an internal combustion engine (1) according to Claim 2 or Claim 3, **characterized in that** the virtual start of injection (SBv) is corrected by means of a factor (KORR).

5. Method for performing open-loop and closed-loop control of an internal combustion engine (1) according to one of the preceding claims, **characterized in that** the maximum pressure value (pE(MAX)) is checked for plausibility by comparing said maximum pressure value (pE(MAX)) with a predefined pressure value.

6. Method for performing open-loop and closed-loop control of an internal combustion engine (1) according to one of the preceding claims, **characterized in that** the maximum pressure value (pE(MAX)) is checked for plausibility **in**

**that** said maximum pressure value (pE(MAX)) is compared with a pressure value which is measured at a fixed crank angle.

7. Method for performing open-loop and closed-loop control of an internal combustion engine (1) according to Claim 5 or Claim 6, **characterized in that** in the event of implausibility a diagnostic entry is made in a memory of an electronic control unit (4).

8. Method for performing open-loop and closed-loop control of an internal combustion engine (1) according to one of the preceding claims, **characterized in that** the measuring interval (MESS) is one work cycle of the internal combustion engine (1) or corresponds to a crankshaft angle range which can be selected therefrom, in particular 320 degrees to 420 degrees.

**Revendications**

1. Procédé pour commander et réguler un moteur à combustion interne (1) avec un système à rampe commune incluant des accumulateurs individuels (8), dans lequel une pression de carburant des accumulateurs individuels (pE(i), i = 1, 2 ... n) est détectée pendant un intervalle de mesure (MESS) et est mémorisée et une variation significative de la pression de carburant (pE(i)) est interprétée comme début d'injection (SB = f(pE(i), Phi)) ou comme fin d'injection (SE = f(pE(i), Phi)),
   **caractérisé en ce que**
   en fonction de la fin d'injection (SE), on calcule, par le biais d'une fonction mathématique (FKT), un début d'injection virtuel (SBv) et le début d'injection virtuel (SBv) est posé comme début d'injection réel (SB) pour la commande et la régulation subséquentes du moteur à combustion interne (1) (SB = SBv).

2. Procédé pour commander et réguler un moteur à combustion interne (1) selon la revendication 1,
   **caractérisé en ce que**
   le début d'injection virtuel (SBv) est calculé en lisant dans l'intervalle de mesure (MESS) une valeur de pression maximale (pE(MAX)) mesurée avant la fin d'injection (SE), en calculant une valeur intermédiaire (pE(ZW)) en fonction de la valeur de pression maximale (pE(MAX)) et de la valeur de pression à la fin d'injection (pE(SE)), la valeur intermédiaire (pE(ZW)) et la fin d'injection (SE) définissant la fonction mathématique (FKT), et l'angle de vilebrequin (PhiSBv) du début d'injection virtuel (SBv) étant extrapolé en fonction de la valeur de pression maximale (pE(MAX)) par le biais de la fonction mathématique (FKT).

3. Procédé pour commander et réguler un moteur à combustion interne (1) selon la revendication 2,
   **caractérisé en ce que**
   la valeur intermédiaire (pE(ZW)) est calculée par la relation suivante :

$$pE(ZW) = pE(MAX) - dp$$

et

$$dp = (pE(MAX) - pE(SE)) * F1,$$

avec

   pE(ZW) valeur intermédiaire
   pE(MAX) valeur de pression maximale
   pE(SE) valeur de pression à la fin d'injection
   F1 facteur inférieur à un.

4. Procédé pour commander et réguler un moteur à combustion interne (1) selon la revendication 2 ou 3,
   **caractérisé en ce que**
   le début d'injection virtuel (SBv) est corrigé par le biais d'un facteur (KORR).

**5.** Procédé pour commander et réguler un moteur à combustion interne (1) selon l'une quelconque des revendications précédentes,
**caractérisé en ce que**
la valeur de pression maximale (pE(MAX)) est contrôlée en termes de plausibilité en la comparant avec une valeur de pression prédéfinie.

**6.** Procédé pour commander et réguler un moteur à combustion interne (1) selon l'une quelconque des revendications précédentes,
**caractérisé en ce que**
la valeur de pression maximale (pE(MAX)) est contrôlée en termes de plausibilité en la comparant avec une valeur de pression mesurée pour un angle de vilebrequin fixe.

**7.** Procédé pour commander et réguler un moteur à combustion interne (1) selon la revendication 5 ou 6,
**caractérisé en ce que**
dans le cas de non plausibilité, on effectue une entrée de diagnostic dans une mémoire d'un appareil de commande électronique (4).

**8.** Procédé pour commander et réguler un moteur à combustion interne (1) selon l'une quelconque des revendications précédentes,
**caractérisé en ce que**
l'intervalle de mesure (MESS) représente un jeu de travail du moteur à combustion interne (1) ou correspond à une plage angulaire de vilebrequin sélectionnable à partir de celui-ci, en particulier de 320 degrés à 420 degrés.

**Fig. 1**

**Fig. 2**

START UP SB, SE

Erfassen und Speichern
pE(i) während MESS — S1

i = 1 — S2

A

pE(i) = MIN — S3
nein → Auslesen nächster
Wert — S4

ja

Setzen
Einspritzende SE — S5

Einlesen pE(MAX) — S6

pE(MAX)
plausibel — S7
nein → Diagnose-Eintrag — S8

ja

Berechnen
Zwischenwert pE(ZW) — S9

Extrapolation virtueller
Einspritzbeginn SBv — S10

Korrektur virtueller
Einspritzbeginn SBv — S11

i = n — S12
ja → RETURN — S13

nein

i = i + 1 — S14

A

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4237706 A1
- DE 4433209 A1
- DE 3118425 A1
- DE 4344190 A1